# EUROPEAN PATENT SPECIFICATION

(11) **EP 0 288 226 B1**
(45) Date of publication and mention of the grant of the patent: **23.06.1993**
(21) Application number: 88303430.8
(22) Date of filing: 15.04.1988
(51) Int. Cl.: C08F 10/00, C08F 2/38

(54) **Process for reducing the melt flow of olefin polymer products**
Verfahren zur Verringerung der Schmelzflüssigkeit von Olefinpolymerprodukten
Procédé de réduction de la fluidité à l'état fondu de produits de polymères d'oléfines

(30) Priority: 23.04.1987 US 41501
(43) Date of publication of application: 26.10.1988
(73) Proprietor: SHELL OIL COMPANY, Houston Texas 77002 (US)
(72) Inventor: Burstain, Israel Gershon, Houston Texas 77077 (US)
(74) Representative: Myerscough, Philip Boyd

(56) References cited:
- EP-A- 0 027 474
- US-A- 3 356 667

## Description

In olefin polymerizations, the polymer melt flow can be controlled by varying the hydrogen/propylene ratios in the reactor. At present, changes in polymer melt flow are accomplished by changing the hydrogen concentrations in the reactor. Traditionally, melt flow transitions from a lower melt flow to a higher melt flow have been quickly accomplished by adding hydrogen to the reactor. To achieve a reduction in melt flow extensive venting of the reactor has been traditionally employed to reduce the hydrogen concentration in the reactor but venting to obtain a desired low level hydrogen concentration can take many hours and cause expensive production delays. For example, using conventional melt flow transition techniques and propylene as the olefin in the polymerization reaction, to reduce melt flow from high to low, venting of the reactor can require up to 40 hours at a vent rate of 2700 kg/h (6000 lbs/h) propylene to reduce melt flow from 50 dg/min to 3 dg/min.

Transition from a higher melt flow to a lower one is dependent upon reactor residence time, reactor design, and the magnitude of the desired change in the melt flow value. The time to effect a high melt flow to low melt transition by venting can vary from minutes to many hours depending upon these parameters but the venting method is costly and tends to cause production delays.

The present invention provides a process in accordance with which it is possible to adjust a polymer melt flow from a higher to a lower level in less than half, preferably 10% to 1%, of the time required for conventional venting.

According to the invention there is provided a process for reducing the melt flow of an olefin polymer product during a polymerization reaction comprising the polymerization in a polymerization reactor of at least one alpha olefin in the presence of a polymerization catalyst, polymerization cocatalyst, and hydrogen as a molecular weight control agent, characterised in that at least part of the unreacted hydrogen and at least part of the unreacted alpha olefin in the reactor contents are reacted in the reactor in the presence of a hydrogenation catalyst or are circulated through a fixed bed external to the reactor and containing a hydrogenation catalyst.

The alpha olefin can be, for example, propylene, butene, hexene, octene or ethylene, or other linear or branched alpha olefins. The polymerization reaction temperature suitably is between 20°C and 160°C, especially in the case of such higher olefins as 4-methyl-1-pentene, hexene and decene, although for certain alpha olefins, such as 1-butene, a temperature range between 40°C and 120°C is preferred to yield a polymer product having the desired isotacticity. Low temperature polymerization, between 60°C and 90°C, can also be performed with the advantage of the present invention, for example when the alpha olefin is propylene. The reactor can be heated to a temperature of, for example, 25°C to 100°C to facilitate polymerization.

The polymerization catalyst can be an unsupported catalyst for olefin polymerization. Suitable unsupported catalysts can contain at least one of titanium, chromium, vanadium, zirconium and cobalt. Titanium halide is an unsupported catalyst which can be used in the process of the invention.

Alternatively, it is possible to use a supported catalyst such as a polymerization catalyst on a support of a magnesium halide, preferably magnesium chloride. Other supports for the polymerization catalyst include a titanium halide, silica, magnesia, alumina, a mixed metal oxide, a non-chemically reactive organic polymer or a non-chemically reactive inorganic polymer. The preferred titanium halide support is titanium chloride. Catalysts which can be supported include those containing chromium, vanadium, zirconium or cobalt, or mixtures of two or more of these.

The cocatalyst for use in the process of the invention can be, for example, at least one metal alkyl, metal alkyl alkoxide, metal alkyl halide or a metal alkyl hydride, and preferably is an aluminium alkyl.

A selectivity control agent can be used in the process. Aromatic esters, amines, hindered amines, esters, phosphites, phosphates, aromatic diesters, alkoxy silanes, aryloxy silanes, silanes and hindered phenols, and mixtures of these, may be used as selectivity control agent.

The process of the invention is less costly than the conventional method of reducing the melt flow of a polymer product during polymerization by venting. The present process reduces the hydrogen concentration in the reactor to a level such that the polymer product has the desired melt flow index in less time than is required by the conventional venting procedure. The process of the invention involves reacting the hydrogen with an alpha olefin, such as propylene, using the hydrogenation catalyst. The reaction in the presence of the hydrogenation catalyst can be carried out in the reactor or externally, for example by circulating part of the reactor contents through an external, preferably fixed, bed of the hydrogenation catalyst.

Given the above parameters, the polymerization of the alpha olefin can be carried out by known alpha olefin polymerization processes.

The reactor can be a liquid phase reactor, a gas phase reactor, a solvent/slurry reactor or a solution polymerization reactor. Suitable reactors are described in US-A-3,652,527, US-A-3,912,701, US-A-3,992,332, US-A-3,428,619, US-A-3,110,707 and US-A-3,658,780.

Hydrogenation catalysts useful for olefin hydrogenation which contain a transition metal, including nickel, platinum and palladium catalysts, are preferred for use in the process of the invention.

It is preferred to minimize any deleterious effects that the hydrogenation catalyst may have on the polymerization catalyst activity and on polymer quality. The hydrogenation catalyst can be, for example, placed in a carrier of hydrocarbon solvent, such as toluene, before it is introduced into the reactor.

The catalytic reduction of the alpha olefin with hydrogen can be carried out outside the polymerization reactor by circulating at least part of the reactor contents through a fixed, external catalytic bed containing a hydrogenation catalyst, such as the nickel hydrogenation catalyst. An advantage of the external fixed bed system is that it is not necessary to deactivate or remove the hydrogenation catalyst from the fixed bed following the catalytic reduction of the hydrogenation concentration, thus potentially saving even more money and steps in polymerization reactions.

In the process, the hydrogen concentration in the reactor contents can be adjusted to be, for example, from 0.01 mole percent to 20 mole percent to provide a polymer product having a melt flow between 0.01 and 2,000 dg/min, preferably between 0.1 and 1,000 dg/min and in some cases between 0.1 and 700 dg/min.

Hydrogenation catalysts useful to obtain a fast transition from high melt flow to low melt flow can be a transition metal catalyst for the hydrogenation of alpha olefins, benzenetricarbonylchromium, dibenzenechromium, dihydridochlorotris(triphenylphosphine) iridium (III), hydridodichlorotris(triphenylphosphine)iridium (III) or dicarbonylcyclopentadienylcobalt. When a transition metal catalyst is used as the hydrogenation catalyst, a preferred catalyst of this type is a supported nickel catalyst. Supported platinum catalysts and supported palladium catalysts can also be used. It is preferred to use transition metal catalysts supported on alumina, silica, carbon or carborundum.

The most preferred nickel catalyst for use in accordance with the present invention is bis-1,5-cyclooctadiene nickel. Nickel octanoate is another preferred nickel catalyst.

When the hydrogenation catalyst is directly added to the reactor, the preferred amount of hydrogenation catalyst, in parts per million based on the reactor contents can be from 0.01 to 3,000 parts per million, preferably 0.1 to 100 parts per million. From 1 to 20, preferably 5 to 15 parts per million of hydrogenation catalyst can be used in accordance with the invention depending on which hydrogenation catalyst is used in the polymerization. In the most preferred embodiment of the present invention, using bis-1,5-cyclooctadiene nickel as hydrogenation catalyst, from 5 to 15 parts per million of the nickel catalyst are added to the reactor to provide the desired results.

Other hydrogenation catalysts that may be used in accordance with the invention include other nickel hydrogenation catalysts, nickel in graphite, such as graphimet Ni-10; palladium in graphite such as graphimet Pd-1; benzenetricarbonylchromium, C₆H₆Cr (CO)₃; dibenzenechromium, (C₆H₆)₂Cr; dicarbonylcyclopentadienylcobalt, (C₅H₅)Co(CO)₂; dihydridochlorotris(triphenylphosphine) iridium (III), Ir(H₂)Cl[P (C₆H₅)₃]₃; hydridodichlorotris(triphenylphosphine)iridium (III), Ir(H)Cl₂[P(C₆H₅)₃]₃; bis(1,5-cyclooctadiene)nickel, (CH₈N₁₂)₂Ni; bis(cyclopentadienyl)nickel, dry, Ni(C₅H₅)₂; tetrakis(diethylphenylphosphonite)nickel, [C₆H₅P(OC₂H₅)₂]₄Ni; tetrakis(methyldiphenylphosphine)nickel, [(C₆H₅)₂PCH₃]₄Ni; tetrakis(triethylphosphine)nickel, [C₂H₅)₃P]₄Ni; tetrakis(triphenylphosphine)nickel, [(C₆H₅)₃P]₄Ni; tetrakis(trifluorophosphine)nickel, (PF₃)₄Ni; tetrakis(triphenylphosphine)palladium, Pd[(C₆H₅)₃P]₄; bis(triphenylphosphine)platinum(II)chloride, PtCl₂[(C₆H₅)₃P]₂; dichloro(cycloocta-1,5-diene)platinum(II); Pt(C₈H₁₂)Cl₂; tetrakis(triphenylphosphine)platinum, Pt[(C₆H₅)₃P]₄ chloro(norbornadiene)rhodium(I) dimer, [RhCl(C₇H₈)]₂; dihydridotetrakis(triphenylphosphine)ruthenium(II), [(C₆H₅)₃P]₄RuH₃; potassium hexachlororuthenate(IV), K₂RuCl₆; and tris(triphenylphosphine)ruthenium(II) chloride, [(C₆H₅)₃P]₃RuCl₂.

A nickel catalyst is the preferred hydrogenation catalyst for use in accordance with the present invention since it is insensitive to the presence of, for example, tri-ethyl aluminium (TEA), PEEB and Si(OR)ₓ(R')₄₋ₓ wherein 0 < x ≦ 4, but capable of being poisoned by reagents containing reactive chloride. Such a nickel catalyst can be stabilized with an alkyl aluminium, such as triethyl aluminium, in a hydrocarbon solvent. Sensitivity to active chloride or water can serve to limit the life of a hydrogenation catalyst in the reactor, especially when the olefin polymerization catalyst contains a transition metal, such as titanium, chromium, vanadium, zirconium or cobalt. Poisoning of the hydrogenation catalyst can permit continuation of the polymerization reaction at the desired lower polymer melt flow without further loss of hydrogen (H₂). Hydrogenation catalysts such as nickel octanoate can be used in the process since they are easily poisoned by compounds such as diethyl aluminium chloride (DEAC), and thereby provide a reaction wherein the hydrogen consumption can be controlled. Hydrogenation catalysts which are supported transition metal catalysts, supported on, for example, alumina, silica, clay, carbon, layered clay or carborundum, are also effective.

It has been found that removal of the hydrogenation catalyst from the reactor or deactivation of the hydrogenation catalyst once the hydrogen concentration has been reduced to the desired level is very helpful to achieve good results. The hydrogenation catalyst in the reactor can be deactivated, or poisoned, by adding a reactive chlorine-containing compound, such as diethyl aluminium chloride, silicon tetrachloride, ethyl aluminium dichloride or chlorine gas to the reactor to stop any unwanted consumption of hydrogen after the desired hydrogen concentration has been achieved. In a continuous process, the depletion or removal of the hydrogenation catalyst can be achieved upon removal of polymer product.

The process of the invention can achieve a rapid transition from a higher melt flow polymer product to a lower melt flow polymer product, generally in less than 50%, and preferably in only 1% to 10%, of the time for reducing the melt flow of product by the conventional venting process.

The invention will now be described by reference to the following Examples.

### Example 1

To a 3.8 litre (one U.S. gallon) polymerization reactor, 2700 ml (cc) of liquid propylene was added. The liquid propylene was initially maintained at ambient temperature, 20-24°C, in the reactor. The reactor was then heated to about 60°C and hydrogen gas was directly injected into the reactor in an amount to establish an initial liquid phase concentration of hydrogen of about 0.15% mol. About 0.14 mmole of diphenyl dimethoxy silane, 0.56 mmole of triethylaluminium and 0.008 mmole titanium equivalent of a polymerization catalyst were added to the reactor. The temperature in the reactor was then allowed to increase to 67°C.

For 20-30 minutes, additional hydrogen was directly added to the reactor until a liquid phase concentration of hydrogen of around 0.5% mol was obtained. A nickel-containing solution was added to the reactor, to a level of 4 ppm Ni (basis - total weight of reactor contents). The nickel solution contained nickel octanoate (as hydrogenation catalyst), cyclohexane and triethyl aluminium (TEA), (TEA stabilized the solution). Immediately following the addition of the nickel solution a temperature exotherm occurred between 2 and 4°C indicating a significant increase in energy being evolved from the reactor. Gas chromatographic analysis of the nonpolymerized liquid contents indicated that an immediate reduction in hydrogen concentration had occurred.

After 25 minutes, the hydrogen concentration had reduced essentially to zero. A substantial increase in molecular weight of the polymer product formed after the initial injection of the nickel solution was confirmed by gel permeation chromatography. The final yield was about 1.08 × 10⁶ grams polypropylene per gram titanium, indicating no significant loss in catalyst performance.

### Example 2

The control of melt flow transition in an alpha olefin polymerization reaction was tested in a continuous gas phase reactor. During normal operation, the reactor was continuously fed with propylene, a Ti supported Shell SHAC® catalyst (Shell high activity catalyst) with an aluminium alkyl as cocatalyst, a selectivity control agent (SCA) and hydrogen to maintain the production of a polymer product having a desired but high melt flow.

The experiment started by first establishing a base line for hydrogen consumption during the reaction. This base line was established by stopping the catalyst/cocatalyst, SCA and hydrogen flows and blocking the reactor vent. The hydrogen concentration in the reactor was monitored by Gas Chromatography (GC). The GC analysis showed that the hydrogen concentration reduced from 2.8% mole to 2.1% mole after 1.5 hours. This change in rate suggests that under normal polymerization, hydrogen is being consumed or lost at a rate of 0.008% mole/min.

### Example 3

The process described in Example 2 was repeated, but instead of stopping the catalyst and cocatalyst, SCA and hydrogen feeds, the polymerization reaction was continued and a steady hydrogen concentration was maintained by continuously feeding hydrogen into the reactor. When a steady reactor operation was achieved, the hydrogen feed and the reactor vent were shut down and the "initial" hydrogen concentration was recorded as shown in Table 1. This was followed with an injection of a hydrogenation catalyst (bis 1,5-cyclooctadiene Ni(O) stabilized with aluminium alkyl). The hydrogenation catalyst was injected into the reactor in a single shot to achieve a calculated value of 5 ppm Ni (basis - the polymer weight in the reactor bed). During this process the polymer production was maintained at a constant rate by continuously feeding propylene catalyst, cocatalyst and the selectivity control agent into the reactor. The changes in the hydrogen concentrations were monitored by GC. The experimental data are summarized in Table 1 in terms of elapsed time after injection of the hydrogenation catalyst, reactor bed temperature, temperature at the reactor inlet, concentration of hydrogen and concentration of propane.

### Example 4

The process described in Example 3 was repeated with the injection of the same hydrogenation catalyst but at a 10 ppm Ni concentration (basis - the polymer weight in the reactor bed). These data are summarized in Table 2.

### Example 5

The process described in Example 3 was repeated with the injection of the same hydrogenation catalyst but at 15 ppm Ni concentration (basis - the polymer weight in the reactor bed). These data are summarized in Table 3.

The data summarized in Table 4 show that the injection of the hydrogenation catalyst had no deleterious effect on the polymerization catalyst performance. The lower than theoretical levels of Ni in the polymer product appear to be due to the normal polymer bed exchange that occurs during the polymerization reaction.

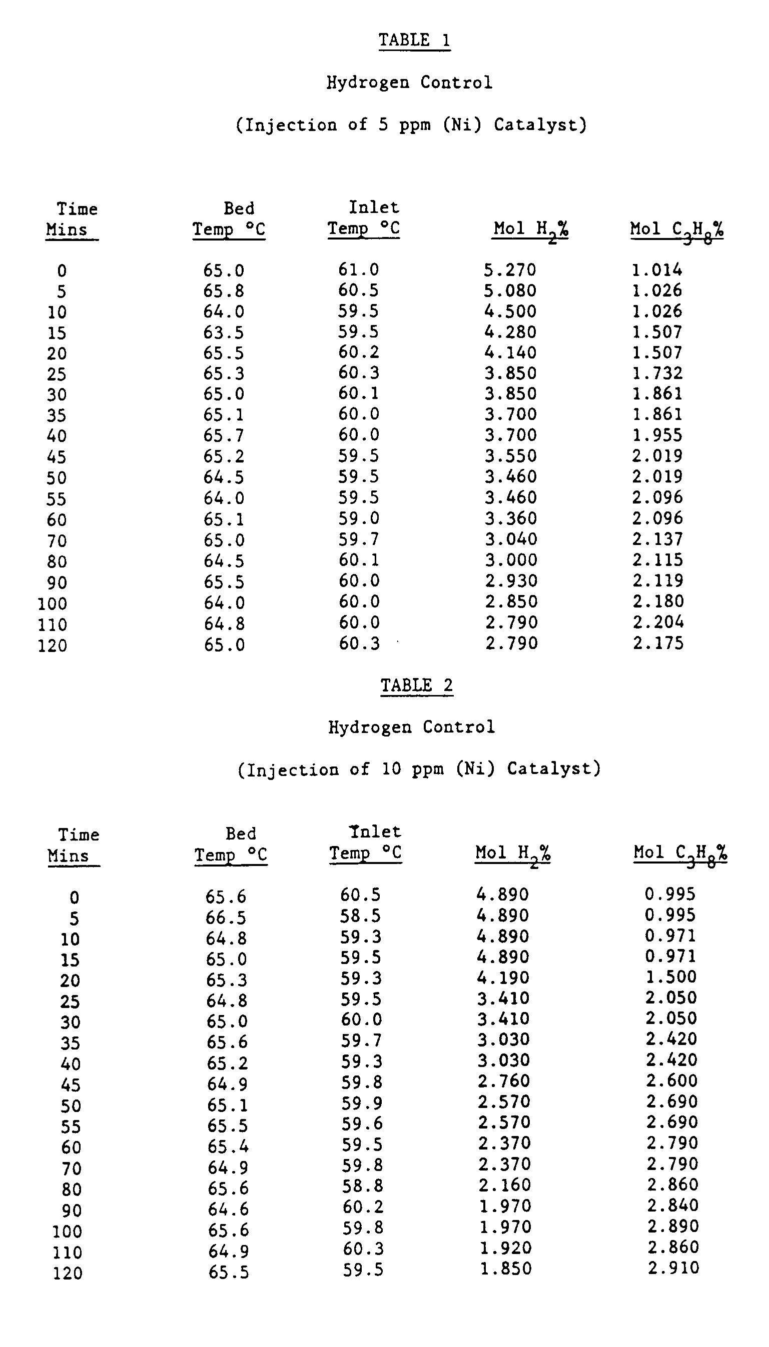

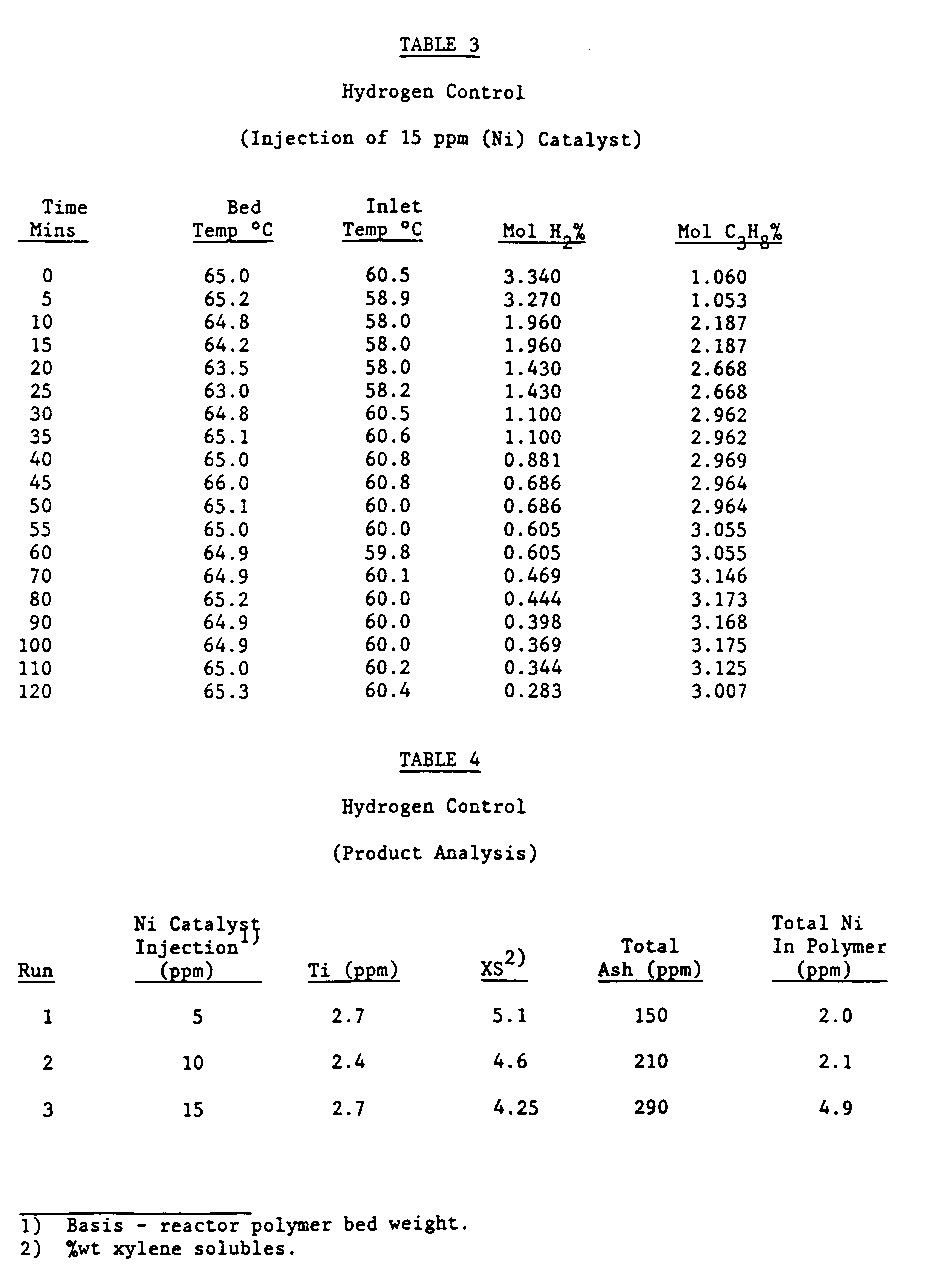

## Claims

1. A process for reducing the melt flow of an olefin polymer product during a polymerization reaction comprising the polymerization in a polymerization reactor of at least one alpha olefin in the presence of a polymerization catalyst, polymerization cocatalyst, and hydrogen as a molecular weight control agent, characterised in that at least part of the unreacted hydrogen and at least part of the unreacted alpha olefin in the reactor contents are reacted in the reactor in the presence of a hydrogenation catalyst or are circulated through a fixed bed external to the reactor and containing a hydrogenation catalyst.

2. A process according to claim 1, wherein the hydrogen concentration in the polymerization reactor is 0.01 mole% to 20 mole%.

3. A process according to claim 1 or 2, wherein said hydrogenation catalyst is at least one of a transition metal catalyst, benzenetricarbonylchromium, dibenzenechromium, dihydridochlorotris (triphenylphosphine)iridium (III), hydridodichlorotris(triphenylphosphine)iridium (III) and dicarbonylcyclopentadienylcobalt.

4. A process according to claim 3, wherein the transition metal catalyst is a supported nickel catalyst, a supported platinum catalyst or a supported palladium catalyst.

5. A process according to claim 4, wherein the support is at least one of alumina, silica, carbon and carborundum.

6. A process according to claim 4 or 5, wherein said nickel catalyst is bis-1,5-cyclooctadiene nickel.

7. A process according to claim 4, 5 or 6, wherein said nickel catalyst has been stabilized with an alkyl aluminium in a hydrocarbon solvent.

8. A process according to claim 7, wherein said alkyl aluminium is triethyl aluminium.

9. A process according to claim 4 or 5, wherein said nickel catalyst is nickel octanoate.

10. A process according to any one of claims 1 to 9, wherein the hydrogenation catalyst is added to the reactor in an amount of 0.01 to 3000 ppm based on the total weight of reactor contents and is subsequently removed together with polymer product.

11. A process according to claim 10, wherein the amount of hydrogenation catalyst added to the reactor is 0.1 to 100 ppm based on the total weight of the reactor contents.

12. A process according to claim 11, wherein the amount of hydrogenation catalyst added to the reactor is 1 to 20 ppm based on the total weight of the reactor contents.

13. A process according to claim 12, wherein the amount of hydrogenation catalyst is 5 to 15 ppm based on the total weight of the reactor contents.

14. A process according to any one of the preceding claims, wherein said reactor is a gas phase reactor, liquid phase reactor, solvent/slurry reactor or solution reactor.

## Patentansprüche

1. Verfahren zur Verringerung des Schmelzflusses eines α-Olefin-Polymerproduktes während der Polymerisationsreaktion, umfassend das Polymerisieren mindestens eines α-Olefins in Gegenwart eines Polymerisations-Katalysators, Polymerisations-Cokatalysators und von Wasserstoff als Mittel zur Steuerung des Molekulargewichts in einem Polymerisationsreaktor, dadurch gekennzeichnet, daß mindestens ein Teil des nicht umgesetzten Wasserstoffs und mindestens ein Teil des nicht umgesetzten α-Olefins in dem Reaktorinhalt innerhalb des Reaktors in Gegenwart eines Hydrierungskatalysators umgesetzt oder durch ein Festbett außerhalb des Reaktors, das einen Hydrierungskatalysator enthält, geleitet wird.

2. Verfahren nach Anspruch 1, wobei die Wasserstoffkonzentration in dem Polymerisationsreaktor 0,01 mol-% bis 20 mol-% beträgt.

3. Verfahren nach Anspruch 1 oder 2, wobei der Hydrierungskatalysator mindestens einer ist von einem Übergangsmetallkatalysator, Benzoltricarbonylchrom, Dibenzolchrom, Dihydridochlortris(triphenylphosphin)iridium(III), Hydridodichlortris(triphenylphosphin)iridium(III) und Dicarbonylcyclopentadienylcobalt.

4. Verfahren nach Anspruch 3, wobei der Übergangsmetallkatalysator ein Nickelkatalysator auf einem Träger, ein Platinkatalysator auf einem Träger oder ein Palladiumkatalysator auf einem Träger ist.

5. Verfahren nach Anspruch 4, wobei der Träger mindestens einer ist von Tonerde, Kieselsäure, Kohlenstoff und Carborund.

6. Verfahren nach Anspruch 4 oder 5, wobei der Nickelkatalysator Bis-1,5-cyclooctadiennickel ist.

7. Verfahren nach Anspruch 4, 5 oder 6, wobei der Nickelkatalysator stabilisiert worden ist mit einem Alkylaluminium in einem Kohlenwasserstoff-Lösungsmittel.

8. Verfahren nach Anspruch 7, wobei das Alkylaluminium Triethylaluminium ist.

9. Verfahren nach Anspruch 4 oder 5, wobei der Nickelkatalysator Nickeloctanoat ist.

10. Verfahren nach einem der Ansprüche 1 bis 9, wobei der Hydrierungskatalysator zu dem Reaktor in einer Menge von 0,01 bis 3000 ppm, bezogen auf das Gesamtgewicht des Reaktorinhalts, zugesetzt und anschließend zusammen mit dem Polymerprodukt entfernt wird.

11. Verfahren nach Anspruch 10, wobei die Menge an Hydrierungskatalysator, die zu dem Reaktor zugesetzt wird, 0,1 bis 100 ppm, bezogen auf das Gesamtgewicht des Reaktorinhalts, beträgt.

12. Verfahren nach Anspruch 11, wobei die Menge an Hydrierungskatalysator, die zu dem Reaktor zugesetzt wird, 1 bis 20 ppm, bezogen auf das Gesamtgewicht des Reaktorinhalts, beträgt.

13. Verfahren nach Anspruch 12, wobei die Menge an Hydrierungskatalysator 5 bis 15 ppm, bezogen auf das Gesamtgewicht des Reaktorinhalts, beträgt.

14. Verfahren nach einem der vorangehenden Ansprüche, wobei der Reaktor ein Gasphasenreaktor, Flüssigphasenreaktor, Lösungs/Aufschlämmungs-Reaktor oder Lösungsreaktor ist.

## Revendications

1. Procédé pour faire diminuer la fluidité à l'état fondu d'un polymère d'oléfine, produit au cours d'une réaction de polymérisation comprenant la polymérisation, dans un réacteur de polymérisation, d'au moins une alpha-oléfine, en présence d'un catalyseur de polymérisation, d'un co-catalyseur de polymérisation, et d'hydrogène utilisé comme agent de limitation de la masse moléculaire, **caractérisé** en ce que l'on fait réagir dans le réacteur, en présence d'un catalyseur d'hydrogénation, au moins une partie de l'hydrogène n'ayant pas réagi et au moins une partie de l'alpha-oléfine n'ayant pas réagi, présents dans le contenu du réacteur, ou bien en ce qu'on les fait passer à travers un lit fixe externe au réacteur et contenant un catalyseur d'hydrogénation.

2. Procédé conforme à la revendication 1, dans lequel la Concentration d'hydrogène dans le réacteur de polymérisation vaut de 0,01 % à 20 % en moles.

3. Procédé conforme à la revendication 1 ou 2, dans lequel ledit catalyseur d'hydrogénation est au moins un catalyseur choisi parmi les catalyseurs à base d'un métal de transition, le benzène-tricarbonyl-chrome, le dibenzène-chrome, le dihydruro-chloro-tris(triphénylphosphine)-iridium-(III), l'hydruro-dichloro-tris(triphénylphosphine)-iridium-(III) et le dicarbonyl-cyclopentadiényl-cobalt.

4. Procédé conforme à la revendication 3, dans lequel le catalyseur à base d'un métal de transition est un catalyseur au nickel supporté, un catalyseur au platine supporté ou un catalyseur au palladium supporté.

5. Procédé conforme à la revendication 4, dans lequel le support est au moins un support choisi parmi l'alumine, la silice, le carbone et le carborundum.

6. Procédé conforme à la revendication 4 ou 5, dans lequel ledit catalyseur au nickel est du bis-1,5-cyclooctadiényl-nickel

7. Procédé conforme à la revendication 4, 5 ou 6, dans lequel ledit catalyseur au nickel a été stabilisé avec un alkyl-aluminium dans un solvant hydrocarboné.

8. Procédé conforme à la revendication 7, dans lequel ledit alkyl-aluminium est du triéthyl-aluminium.

9. Procédé conforme à la revendication 4 ou 5, dans lequel ledit catalyseur au nickel est de l'octanoate de nickel.

10. Procédé conforme à l'une quelconque des revendications 1 à 9, dans lequel le catalyseur d'hydrogénation est introduit dans le réacteur à raison de 0,01 à 3000 ppm par rapport au poids total du contenu du réacteur, et en est ensuite retiré conjointement avec le polymère produit.

11. Procédé conforme à la revendication 11, dans lequel la proportion de catalyseur d'hydrogénation introduit dans le réacteur vaut de 0,1 à 100 ppm par rapport au poids total du contenu du réacteur.

12. Procédé conforme à la revendication 11, dans lequel la proportion de catalyseur d'hydrogénation introduit dans le réacteur vaut de 1 à 20 ppm par rapport au poids total du contenu du réacteur.

13. Procédé conforme à la revendication 12, dans lequel la proportion de catalyseur d'hydrogénation vaut de 5 à 15 ppm par rapport au poids total du contenu du réacteur.

14. Procédé conforme à l'une quelconque des revendications précédentes, dans lequel ledit réacteur est un réacteur pour réaction en phase gazeuse, un réacteur pour réaction en phase liquide, un réacteur pour réaction en solvant/suspension ou un réacteur pour réaction en solution.
